(19) Europäisches Patentamt / European Patent Office / Office européen des brevets

(11) **EP 4 643 648 A1**

(12) **EUROPEAN PATENT APPLICATION**
published in accordance with Art. 153(4) EPC

(43) Date of publication:
**05.11.2025  Bulletin 2025/45**

(21) Application number: **23912323.5**

(22) Date of filing: **28.12.2023**

(51) International Patent Classification (IPC):
*A23J 3/14* (2006.01)    *A23C 11/02* (2025.01)
*A23J 3/16* (2006.01)    *A23J 3/18* (2006.01)
*A23L 2/39* (2006.01)    *A23L 2/66* (2006.01)
*A23L 11/00* (2025.01)   *A23L 25/00* (2016.01)

(52) Cooperative Patent Classification (CPC):
**A23C 11/02; A23J 3/14; A23J 3/16; A23J 3/18;
A23L 2/39; A23L 2/66; A23L 11/00; A23L 25/00**

(86) International application number:
**PCT/JP2023/047293**

(87) International publication number:
**WO 2024/143546 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022  JP 2022211776**

(71) Applicant: **Amano Enzyme Inc.
Nagoya-shi
Aichi 460-8630 (JP)**

(72) Inventor: **SAKAI, Kiyota
Kakamigahara-shi, Gifu 509-0109 (JP)**

(74) Representative: **Müller-Boré & Partner
Patentanwälte PartG mbB
Friedenheimer Brücke 21
80639 München (DE)**

(54) **METHOD FOR IMPROVING LIQUID RETAINABILITY OF VEGETABLE PROTEIN-CONTAINING DRY COMPOSITION, METHOD FOR IMPROVING FOAMABILITY DURING WATER SUSPENSION, AND METHOD FOR IMPROVING EMULSIFIABILITY DURING WATER SUSPENSION**

(57)    The purpose of the present invention is to provide a processing technology that improves the liquid retainability of a vegetable protein-containing dry composition. This method for improving the liquid retainability of a vegetable protein-containing dry composition comprises: an enzyme treatment step for causing a protein deamidase to act on a vegetable protein-containing composition to obtain a processed vegetable protein-containing composition; and a drying step for drying the processed vegetable protein-containing composition to obtain a processed vegetable protein-containing dry composition, and according to the method, the liquid retainability of the processed vegetable protein-containing dry composition when coexisting with liquid can be improved.

## Description

Technical Field

The present invention relates to a processing technique to improve the liquid retainability of a plant protein-containing dry composition, and a processing technique to improve the liquid retainability of a plant protein-containing dry composition and improve the foamability and/or the emulsifiability during suspension in water.

Background Art

It is predicted that the world population will reach 9.7 billion in 2050, and it is feared that the future protein demand will exceed the supply (protein crisis). Under such circumstances, the movement of replacing animal proteins by plant proteins with less environmental burden is increasingly accelerated.

In general, to enhance transportability and storability of foods, processing of drying foods is performed (NPL 1). With the spread of plant protein foods and beverages, some products are distributed in the form of dried products. Meanwhile, it has been reported that spray-dried soybean milk has poor compatibility with water, and freeze-dried soybean milk has reduced protein solubility in water (NPL 2).

Citation List

Non Patent Literature

NPL 1: Chart for Supporting Patent Licensing 2004, General 15, Food Drying Technology, issued March 2005, National Center for Industrial Property Information and Training
NPL 2: Tokuji WATANABE, Osamu NAKAYAMA, Kazuyoshi ABE and Setsuko MIYANAGA, Study of Spray-dried Soybean Milk, Journal for the utilization of agricultural products, Volume 8 Issue 6, December 1961, Pages 288-293

Summary of Invention

Technical Problem

In view of the recent spread of plant protein foods and beverages, it is desired that more products can be distributed in the form of dried products. As described above, however, as it has been reported that soybean milk has poor compatibility with water after drying, it is desired to improve the compatibility with a liquid when the dried product of the plant protein-containing composition is made to coexist with the liquid again, specifically, liquid retainability.

Therefore, an object of the present invention is to provide a processing technique for improving the liquid retainability of a plant protein-containing dry composition.

Solution to Problem

As a result of intensive studies, the present inventor has found that by performing a processing treatment of making a protein deamidase to act on a plant protein-containing composition and then drying the mixture, the liquid retainability of the resulting processed plant protein-containing dry composition is improved. Furthermore, it has also been found that such a processing treatment improves the foamability and/or emulsifiability when the processed plant protein-containing dry composition obtained is suspended in water. The present invention has been accomplished by further studies on the basis of these findings.

In summary, the present invention provides aspects of invention as itemized below.

Item 1. A method for improving liquid retainability of a plant protein-containing dry composition, the method including:

an enzymatic treatment step of making a protein deamidase act on a plant protein-containing composition to obtain a processed plant protein-containing composition; and
a drying step of drying the processed plant protein-containing composition to obtain a processed plant protein-containing dry composition,
in which the liquid retainability when the processed plant protein-containing dry composition coexists with a liquid is improved.

Item 2. The method for improving liquid retainability according to item 1, in which the plant protein is a protein of a plant selected from the group consisting of pulse crops, cereal crops, and seeds.

Item 3. The method for improving liquid retainability according to item 1 or 2, in which the plant protein is a protein of a plant selected from the group consisting of soybean, pea, lentil, chickpea, broad bean, mung bean, wheat, barley, oat, sorghum, rice, rye, almond, peanut, cashew nut, hazelnut, pistachio, walnut, hemp seed, and sunflower seed.

Item 4. A liquid retainability improver for a plant protein-containing dry composition, the liquid retainability improver including a protein deamidase.

Item 5. A method for improving foamability during suspension of a plant protein-containing dry composition in water, the method including:

an enzymatic treatment step of making a protein deamidase act on a plant protein-containing composition to obtain a processed plant protein-containing composition; and

a drying step of drying the processed plant protein-containing composition to obtain a processed plant protein-containing dry composition,

in which foamability is improved when the processed plant protein-containing dry composition is suspended in water.

Item 6. The method for improving foamability according to item 5, in which the plant protein is a protein of a plant selected from the group consisting of pulse crops, cereal crops, and seeds.

Item 7. The method for improving foamability according to item 5 or 6, in which the plant protein is a protein of a plant selected from the group consisting of soybean, pea, lentil, chickpea, broad bean, mung bean, wheat, barley, oat, sorghum, rice, almond, peanut, hazelnut, walnut, sunflower seed, and cranberry seed.

Item 8. The method for improving foamability according to any one of items 5 to 7, in which the plant protein is a protein of almond.

Item 9. An improver of foamability during suspension of a plant protein-containing dry composition in water, the improver including a protein deamidase.

Item 10. A method for improving emulsifiability during suspension of a plant protein-containing dry composition in water, the method including:

an enzymatic treatment step of making a protein deamidase act on a plant protein-containing composition to obtain a processed plant protein-containing composition; and

a drying step of drying the processed plant protein-containing composition to obtain a processed plant protein-containing dry composition,

in which emulsifiability is improved when the processed plant protein-containing dry composition is suspended in water.

Item 11. The method for improving emulsifiability according to item 10, in which the plant protein is a protein of a plant selected from the group consisting of pulse crops, cereal crops, and seeds.

Item 12. The method for improving emulsifiability according to item 10 or 11, in which the plant protein is a protein of a plant selected from the group consisting of soybean, pea, lentil, chickpea, broad bean, mung bean, wheat, barley, oat, rice, rye, almond, peanut, cashew nut, pistachio, walnut, hemp seed, chia seed, and sunflower seed.

Item 13. The method for improving emulsifiability according to any one of items 10 to 12, in which the plant protein is a protein of oat.

Item 14. An improver of emulsifiability during suspension of a plant protein-containing dry composition in water, the improver including a protein deamidase.

Item 15. A method for producing a processed plant protein-containing dry composition, the method including:

an enzymatic treatment step of making a protein deamidase act on a plant protein-containing composition to obtain a processed plant protein-containing composition; and

a drying step of drying the processed plant protein-containing composition to obtain a processed plant protein-containing dry composition,

in which liquid retainability when the processed plant protein-containing dry composition coexists with a liquid is improved.

Item 16. The method according to item 15, in which foamability and/or emulsifiability when the processed plant protein-containing dry composition is further suspended in water is improved.

Item 17. A processed plant protein-containing dry composition obtained by the method according to item 15 or 16.

Item 18. Use of an enzyme agent including a protein deamidase for improving liquid retainability of a plant protein-containing dry composition.

Item 19. The use according to item 18, in which the use further includes use for improving foamability when the plant protein-containing dry composition is suspended in water.

Item 20. The use according to item 18 or 19, in which the use further includes use for improving emulsifiability when the plant protein-containing dry composition is suspended in water.

Advantageous Effects of Invention

The present invention provides a processing technique to improve liquid retainability of a plant protein-containing dry composition.

Description of Embodiments

1. Method for improving liquid retainability of plant protein-containing dry composition, method for improving foamability during suspension in water, and method for improving emulsifiability during suspension in water

The method for improving the liquid retainability of a plant protein-containing dry composition of the present invention is characterized by including an enzymatic treatment step of making a protein deamidase act on a plant protein-containing composition to obtain a processed plant protein-containing composition, and a drying step of drying the processed plant protein-containing composition to obtain a processed plant protein-containing dry composition, and characterized in that the liquid retainability when the processed plant protein-containing dry composition coexists with a liquid is improved.

The method for improving foamability during suspension of a plant protein-containing dry composition in water of the present invention is characterized by including an enzymatic treatment step of making a protein deamidase act on a plant protein-containing composition to obtain a processed plant protein-containing composition, and a drying step of drying the processed plant protein-containing composition to obtain a processed plant protein-containing dry composition, and characterized in that foamability is improved when the processed plant protein-containing dry composition is suspended in water. Furthermore, in a preferred embodiment of the present invention, the processed plant protein-containing dry composition also has improved foam stability when suspended in water.

The method for improving emulsifiability during suspension of a plant protein-containing dry composition in water of the present invention is characterized by including an enzymatic treatment step of making a protein deamidase act on a plant protein-containing composition to obtain a processed plant protein-containing composition, and a drying step of drying the processed plant protein-containing composition to obtain a processed plant protein-containing dry composition, and characterized in that emulsifiability is improved when the processed plant protein-containing dry composition is suspended in water. Furthermore, in a preferred embodiment of the present invention, the processed plant protein-containing dry composition also has improved emulsion stability when suspended in water.

In the method for improving the liquid retainability of a plant protein-containing dry composition of the present invention, the method for improving foamability during suspension in water of a plant protein-containing dry composition of the present invention, and the method for improving emulsifiability during suspension in water of a plant protein-containing dry composition of the present invention, "improving liquid retainability", "improving foamability during suspension in water", and "improving emulsifiability during suspension in water" will be described in detail in "2. Improver of liquid retainability of plant protein-containing dry composition, improver of foamability during suspension in water, and improver of emulsifiability during suspension in water".

In the present description, a method for improving the liquid retainability of a plant protein-containing dry composition, a method for improving foamability during suspension of a plant protein-containing dry composition in water, and a method for improving emulsifiability during suspension of a plant protein-containing dry composition in water are collectively referred to as "a method for improving the liquid retainability of a plant protein-containing dry composition and the like".

1-1. Enzymatic treatment step

In the enzymatic treatment step, a protein deamidase is made to act on a plant protein-containing composition to afford a processed plant protein-containing composition. Specifically, a processed plant protein-containing composition is obtained by preparing a plant protein mixture including a plant protein-containing composition and a protein deamidase and subjecting the mixture to a treatment to promote an enzymatic reaction.

1-1-1. Plant protein-containing composition

The plant protein-containing composition is not particularly limited as long as it includes a plant protein and water.

1-1-1-1. Plant protein

The plant protein is not particularly limited as long as its origin is a plant, and examples thereof include pulse crops such as soybean, pea, lentil, chickpea, black bean, broad bean, mung bean, lupine bean, and kidney bean; cereal crops such as wheat, barley, oat, sorghum, rice, rye, buckwheat, barnyard millet, foxtail millet, teff, quinoa, corn, and potato; seeds such as almond, coconut, peanut, cashew nut, hazelnut, pecan nut, macadamia nut, pistachio, walnut, brazil nut, pilinut, chestnut, sesame, pine nut, hemp seed, chia seed, chia, amaranthus, canary seed, linseed, sunflower seed, and cranberry seed; and natural proteins contained in algae. In addition, since the plant protein in the present invention may be any protein derived from a plant, it may be, besides the above-mentioned natural protein, a protein obtained by chemically partially decomposing the above-mentioned natural protein with an acid, an alkali or the like, a protein obtained by enzymatically partially decomposing the above-mentioned natural protein with a protease or the like, a proteins obtained by chemically modifying the above-mentioned natural protein with various reagents, or a protein obtained by artificially synthesizing a peptide. The term "hemp" in the present invention refers to a so-called industrial hemp, and specifically refers to a breed which does not contain tetrahydrocannabinol (THC) that causes perceptual alterations or has a low THC concentration. Since industrial hemps do not contain THC or have a low concentration thereof, they have no efficacy as a perceptual alteration drug and cannot lead to abuse.

In the present invention, the above-mentioned plant proteins may be used singly or two or more of them may be used in combination.

Among the plant proteins recited above, proteins of soybean, pea, lentil, chickpea, broad bean, mung bean, wheat, barley, oat, sorghum, rice, rye, almond, peanut, cashew nut, hazelnut, pistachio, walnut, hemp seed, and sunflower seed are preferable from the viewpoint of further enhancing the liquid retainability of the processed plant protein-containing dry composition.

Among the plant proteins recited above, proteins of soybean, pea, lentil, chickpea, broad bean, mung bean, wheat, barley, oat, sorghum, rice, almond, peanut, hazelnut, walnut, sunflower seed, and cranberry seed are preferable from the viewpoint of further enhancing the foamability during suspension of the processed plant protein-containing dry composition in water, and almond is particularly preferable. Among the plant proteins recited above, proteins of wheat and sunflower seed are preferable from the viewpoint of enhancing the stability of foams.

Among the plant proteins recited above, proteins of soybean, pea, lentil, chickpea, broad bean, mung bean, wheat, barley, oat, rice, rye, almond, peanut, cashew nut, pistachio, walnut, hemp seed, chia seed, and sunflower seed are preferable, and protein of oat is particularly preferable, from the viewpoint of further enhancing the emulsifiability during suspension of a processed plant protein-containing dry composition in water. Among the plant proteins recited above, proteins of soybean, lentil, chickpea, broad bean, wheat, barley, oat, rice, rye, almond, hazelnut, pistachio, walnut, hemp seed, chia seed, and sunflower seed are preferable from the viewpoint of improving emulsion stability.

1-1-1-2. Other components

The plant protein-containing composition may or may not contain any component as other components in addition to the plant protein. Examples of such other components include components derived from a plant of origin of the plant protein, other food materials, and food additives. Examples of the food additive include a thickener, a binder, a seasoning, a pH adjusting agent, a buffering agent, a coloring agent, and a flavoring agent.

1-1-1-3. Properties

The properties of the plant protein-containing composition may be either textured or untextured.

Textured plant protein-containing composition

The textured plant protein-containing composition includes a textured plant protein material, which is a food material commonly known as alternative meat (pseudo meat). Typical examples of the textured plant protein material include a meat-like texturized material obtained by extruding a raw material mixture including a plant protein and water with an extruder or the like, and drying or freezing the extruded raw material mixture. In the present invention, the "meat" imitated by the textured plant protein material means a muscle of an animal that is edible, and when described as "meat", the "meat" is used in the sense of including not only muscles of mammals and birds but also fish and shellfish.

Examples of the shape of the textured plant protein material include a granular shape and a fibrous shape.

Examples of the granular shape include massive shapes having various sizes such as a small grain type (mince), a large grain type, and a block type (the size increases in the order of the small grain type, the large grain type, and the block type); and flat shapes of various sizes such as a flake type, a fillet type, and a slice type (the size increases in the order of the flake type, the fillet type, and the slice type).

More specific examples of the textured plant protein material include a granular plant protein and a fibrous plant protein. The granular plant protein and the fibrous plant protein both refer to those defined in "JAPANESE AGRICULTURAL STANDARD Vegetable protein". However, the textured plant protein material to be used in the present invention is not limited to the granular plant protein and the fibrous plant protein defined above as long as it is a material textured into a meat-like material as described above.

Regarding the textured plant protein material that can be used in the present invention, the type of plant protein, the characteristics other than the content ratio of plant protein (e.g., properties, moisture content, grain size, product temperature, raw materials other than food additives, food additives, chewiness, water retainability, foreign matters, content amount), and the measurement method thereof can conform to the characteristics and the measurement method defined in "JAPANESE AGRICULTURAL STANDARD Vegetable protein".

Untextured plant protein-containing composition

More specific examples of the properties of the untextured plant protein-containing composition include a liquid form, a slurry form, and a paste form, and a liquid form is preferable.

Specific examples of the untextured plant protein-containing composition include a so-called plant alternative milk (also referred to as a plant milk), and a liquid protein-containing composition (plant protein liquid) including a plant protein material (this refers to a material obtained by extracting and/or purifying a plant protein and is usually provided in a powdered form) and water.

The content of the plant protein in the plant protein material is not particularly limited, and is, for example, 0.01% by weight or more, preferably 0.05% by weight or more or 0.1% by weight or more, more preferably 1% by weight or more, and still more preferably 5% by weight or more. The content of the plant protein in the plant protein material is not particularly limited at its upper limit, and is, for example, 95% by weight or less, preferably 90% by weight or less, and more preferably 87% by weight or less.

The content of the protein in the untextured plant protein-containing composition is not particularly limited, and is, for example, 0.001% by weight or more, 0.01% by weight or more, 0.1% by weight or more, or 0.5% by weight or more, preferably 0.9% by weight or more, more preferably 1% by weight or more, 1.5% by weight or more, 2% by weight or more, or 2.5% by weight or more, still more preferably 3% by weight or more, or 4% by weight or more, and further preferably 4.8% by weight or more, 6% by weight or more, 7% by weight or more, or 8% by weight or more. The content of the protein in the untextured plant protein-containing composition is not particularly limited at the upper limit thereof, and is, for example, 50% by weight or less, 40% by weight or less, 30% by weight or less, or 25% by weight or less, preferably 20% by weight or less, or 15% by weight or less, and more preferably 12% by weight or less, 10% by weight or less, or 9% by weight or less.

When the untextured plant protein-containing composition is a liquid protein-containing composition including a plant protein material and water, the content of the plant protein material in the untextured plant protein-containing composition is, for example, 0.1 to 50% by weight, 0.5 to 40% by weight, or 1 to 30% by weight, preferably 2 to 25% by weight, or 2.5 to 20% by weight, and more preferably 4.8 to 15% by weight, or 8 to 12% by weight.

The untextured plant protein-containing composition may be one in which the plant milk or plant protein liquid has been subjected to an optional treatment other than a treatment of completely decomposing a protein into amino acids and a treatment with a protein deamidase, or may be one in which the plant milk or plant protein liquid has not been subjected to such an optional treatment. Examples of the optional treatment include fermentation (e.g., lactic acid fermentation), and specific examples of the untextured plant protein-containing composition obtained via such a treatment include an alternative yogurt.

1-1-2. Protein deamidase

The type, origin, etc. of the protein deamidase are not particularly limited as long as the enzyme exhibits an action of decomposing an amide group-containing side chain of a protein without cleaving a peptide linkage and without crosslinking the protein. Examples of the protein deamidase include protein deamidases derived from the genus Chryseobacterium, the genus Flavobacterium, the genus Empedobacter, the genus Sphingobacterium, the genus Aureobacterium, the genus Myroides, the genus Luteimicrobium, the genus Agromyces, the genus Microbacterium, and the genus Leifsonia, which are disclosed in JP 2000-50887 A, JP 2001-218590 A, and WO 2006/075772 A. These protein deamidases may be used singly or two or more thereof may be used in combination.

Examples of the protein deamidase include protein glutaminase and protein asparaginase, and in a broad sense, protein arginine deaminase is also included. Among these protein deamidases, protein glutaminase is preferred from the viewpoint of further enhancing the liquid retainability of the processed plant protein-containing dry composition and/or from the viewpoint of further enhancing the foamability and/or the emulsifiability during suspension of the processed plant protein-containing dry composition in water.

Among those protein deamidase enzymes, a protein deamidase derived from the genus Chryseobacterium is more preferable, a protein glutaminase derived from the genus Chryseobacterium is still more preferable, and a protein glutaminase derived from Chryseobacterium proteolyticum species is still more preferable from the viewpoint of further enhancing the liquid retainability of the processed plant protein-containing dry composition and/or from the viewpoint of further enhancing the foamability and/or the emulsifiability during suspension of the processed plant protein-containing dry composition in water.

The protein deamidase can be prepared from a culture solution of a microorganism as an origin of the above protein deamidase. A specific preparation method may be a method of collecting a protein deamidase from a culture solution or a bacterial cell of the above microorganism. For example, in the case of using a microorganism that secrets a protein deamidase, the enzyme can be separated and/or purified after bacterial cells are collected from the culture solution by filtration, centrifugation, or the like in advance, as necessary. In the case of using a microorganism that does not secret a protein deamidase, after bacterial cells are collected from the culture solution in advance, as necessary, the bacterial cells are disrupted by pressurization treatment, ultrasonic treatment, or the like to expose the enzyme, and then the enzyme can be separated and/or purified. As an enzyme separation and/or purification method, a known protein separation and/or purification method can be used without particular limitation, and examples thereof include a centrifugal separation method, a UF concentration method, a salting-out method, and various chromatography methods using an ion exchange resin. The separated and/or purified enzyme can be pulverized by a drying method such as freeze-drying or reduced-pressure drying, and can also be pulverized using an appropriate excipient and/or drying aid in the drying method. The separated and/or purified enzyme can also be liquefied by adding an appropriate additive and subjecting it to filtration sterilization.

The amount of the protein deamidase to be used for the plant protein-containing composition is not particularly limited, and examples of the use amount per 1 g of the plant protein contained in the plant protein-containing composition include 0.005 U or more, 0.01 U or more, 0.1 U or more, 0.5 U or more, or 1 U or more, preferably 3 U or more, or 4 U or more, and more preferably 4.5 U or more, 5 U or more, 5.8 U or more, 9 U or more, 15 U or more, 20 U or more, 30 U or more, 40 U or more, or 50 U or more. The use amount per 1 g of the plant protein contained in the plant protein-containing composition is not particularly limited at the upper limit, and examples thereof include 500,000 U or less, 5000 U or less, 3000 U or less, 1000 U or less, 100 U or less, 80 U or less, 60 U or less, 40 U or less, 30 U or less, 20 U or less, 12 U or less, 8 U or less, or 7 U or less.

For the activity of the protein deamidase, the amount of enzyme liberating 1 $\mu$mol of ammonia per minute using benzyloxycarbonyl-L-glutaminylglycine (Z-Gln-Gly) as a substrate is defined as 1 unit (1 U).

1-1-3. Reaction operation and treatment conditions

The method for preparing the plant protein mixture is not particularly limited. When the plant protein-containing composition contained in the plant protein mixture is in a textured form, the method for preparing the plant protein mixture may be, for example, a method of swelling a dried product of a textured plant protein material with an aqueous solution containing a protein deamidase, or a method of swelling a dried product of a textured plant protein material with water and then mixing the swollen dried product with an aqueous solution containing a protein deamidase. Preferably, a method of swelling a dried product of the textured plant protein material with an aqueous solution containing a protein deamidase is mentioned. When the plant protein-containing composition contained in the plant protein mixture is in an untextured form, the plant protein mixture can be prepared by mixing a plant milk or a plant protein liquid with a protein deamidase.

The treatment conditions (temperature, time, pH, etc.) of the plant protein mixture are not particularly limited as long as the effect of the present invention can be obtained.

The treatment temperature is, for example, 10 to 60°C or 20 to 60°C, more preferably 40 to 55°C, and still more preferably 45 to 52°C. The treatment pH (at 25°C) is, for example, 5 to 8, preferably 5.5 to 7.5, and more preferably 6 to 7. The treatment time is, for example, 0.5 to 48 hours, preferably 1 to 24 hours, and more preferably 8 to 20 hours, or 10 to 18 hours.

These treatment conditions are appropriately selected according to the optimum temperature and the optimum pH of the enzyme to be used, and/or the degree of the required effect of the present invention to be obtained (the effect of improving the liquid retainability of a processed plant protein-containing dry composition, improving foamability during suspension of a processed plant protein-containing dry composition in water, and/or improving emulsifiability during suspension of a processed plant protein-containing dry composition in water). Optimum treatment conditions may be determined through a preliminary experiment.

1-2. Drying step

In the drying step, the processed plant protein-containing composition obtained in the enzymatic treatment step is dried to afford a processed plant protein-containing dry composition.

The drying method is not particularly limited, and examples thereof include freeze drying, vacuum drying, and spray drying, and preferably include freeze drying.

1-3. Other steps

The method for improving the liquid retainability of a plant protein-containing dry composition and the like of the present invention may or may not include a step other than the above-described enzymatic treatment step and drying step. Examples of the other step include a step of preparing a plant protein-containing composition, a step of deactivating an enzyme, an enzymatic treatment step with an enzyme other than a protein deamidase, a cooling step, and a filtration step. These other steps may be performed singly or two or more steps may be performed in combination.

The step of preparing a plant protein-containing composition can be performed by any method for preparing the plant protein-containing composition.

For example, when a plant alternative milk (plant milk) is used as the plant protein-containing composition, the plant protein-containing composition can be prepared by any method for preparing a plant alternative milk according to the type of a plant from which the plant protein is derived. When a liquid protein-containing composition (plant protein liquid) including a plant protein material and water is used as the plant protein-containing composition, the plant protein-containing composition can be prepared by dissolving or dispersing the plant protein material in water. In the step of preparing the plant protein-containing composition, an optional food additive such as a seasoning, a pH adjusting agent, a buffering agent, a coloring agent, or a flavoring agent may or may not be further blended.

2. Improver of liquid retainability of plant protein-containing dry composition, improver of foamability during suspension in water, and improver of emulsifiability during suspension in water

The liquid retainability, or the liquid retainability and the foamability and/or emulsifiability during suspension in water of a dried product of a plant protein-containing composition having been subjected to the processing of treating with a protein deamidase (processed plant protein-containing dry composition) is improved as compared with a dried product of a plant protein-containing composition having not been treated with a protein deamidase (enzyme-untreated plant protein-containing dry composition). Therefore, the present invention further provides an improver of the liquid retainability of a plant protein-containing dry composition, an improver of foamability during suspension in water, and an improver of emulsifiability during suspension in water each containing a protein deamidase.

In the present description, an improver of the liquid retainability of a plant protein-containing dry composition, an improver of foamability during suspension of a plant protein-containing dry composition in water, and an improver of emulsifiability during suspension of a plant protein-containing dry composition in water are collectively referred to as "an improver of the liquid retainability of a plant protein-containing dry composition and the like".

2-1. Application

The improver of the liquid retainability of a plant protein-containing dry composition of the present invention is used for improving the liquid retainability of a plant protein-containing dry composition. The liquid retainability includes water retainability and oil retainability. The improver of the liquid retainability of a plant protein-containing dry composition of the present invention may be used for improving the water retainability of a plant protein-containing dry composition, for improving the oil retainability, or for improving both the water retainability and the oil retainability.

The phrase "liquid retainability is improved" means that a larger amount of liquid is retained when a plant protein-containing dry composition is present together with a liquid as compared with the case of an enzyme-untreated plant protein-containing dry composition. More specifically, when the properties of the plant protein-containing dry composition are in a textured state, it means that the weight in a liquid-drained state of a prepared liquid-swollen product of the plant protein-containing dry composition is increased as compared with the weight in a liquid-drained state of a liquid-swollen product obtained under the same conditions for an enzyme-untreated plant protein-containing dry composition. When the properties of the plant protein-containing dry composition are in an untextured state, it means that the weight of a precipitate fraction obtained by preparing an aqueous suspension of the plant protein-containing dry composition and centrifuging the aqueous suspension is increased as compared with the weight of the precipitate fraction obtained in the same manner for an enzyme-untreated plant protein-containing dry composition.

The improver of foamability during suspension of a plant protein-containing dry composition in water of the present invention is used for improving the foamability during suspension of a plant protein-containing dry composition in water. The phrase "foamability during suspension in water is improved" means that when an aqueous suspension of a plant protein-containing dry composition is prepared and subjected to a homogenizing treatment, the volume of the suspension including foams is larger as compared with the volume of a suspension, including foams, of a homogenized product under the same conditions for an enzyme-untreated plant protein-containing dry composition.

The improver of emulsifiability during suspension of a plant protein-containing dry composition in water of the present invention is used for improving the emulsifiability during suspension of a plant protein-containing dry composition in water. The phrase "emulsifiability during suspension in water is improved" means that when an aqueous suspension of a plant protein-containing dry composition is prepared in the form of an emulsified composition, the emulsifiability evaluated in terms of turbidity is improved as compared with the emulsifiability of an emulsified composition obtained under the same conditions for an enzyme-untreated plant protein-containing dry composition.

2-2. Other components

The improver of the liquid retainability of a plant protein-containing dry composition and the like of the present invention may or may not contain, as components other than the protein deamidase, an additive and/or a base that are/is acceptable in the formulation of an enzyme agent. Examples of such an additive and a base include an excipient, a buffering agent, an antioxidant, an ultraviolet inhibitor, a preservative, an antiseptic, a pH adjusting agent, a dispersant, an emulsifier, a solubilizing agent, a carrier, and a solvent (water or the like). These additives and bases may be used singly, or two or more of them may be used in combination. In addition, the contents of these additives and bases may be appropriately set according to the type and/or preparation form of these components.

2-3. Properties

The properties of the improver of the liquid retainability of a plant protein-containing dry composition and the like of the present invention are not particularly limited, and examples thereof include dry preparations in a powdery form, a fine particulate form, and a granular form, and liquid preparations.

2-4. Others

The plant protein-containing compositions to which the improver of liquid retainability of a plant protein-containing dry composition, the improver of foamability during suspension in water, and the improver of emulsifiability during suspension in water of the present invention are applied, the protein deamidase, which is an effective ingredient, and specific methods of use are as described in detail in "1. Method for improving liquid retainability of plant protein-containing dry composition, method for improving foamability during suspension in water, and method for improving emulsifiability during suspension in water".

3. Method for producing processed plant protein-containing dry composition

The present invention also provides a method for producing a processed plant protein-containing dry composition, including an enzymatic treatment step of making a protein deamidase act on a plant protein-containing composition to obtain a processed plant protein-containing composition, and a drying step of drying the processed plant protein-containing composition to obtain a processed plant protein-containing dry composition, wherein liquid retainability when the processed plant protein-containing dry composition coexists with a liquid is improved.

The processed plant protein-containing dry composition having improved liquid retainability obtained by the production method of the present invention may further have improved foamability and/or emulsifiability when suspended in water.

In the production method of the present invention, the "enzymatic treatment step" and the "drying step" are as described in detail in the above "1. Method for improving liquid retainability of plant protein-containing dry composition, method for improving foamability during suspension in water, and method for improving emulsifiability during suspension in water", and the "improvement in liquid retainability", the "improvement in foamability" and the "improvement in emulsifiability" are as described in detail in the above "2. Improver of liquid retainability of plant protein-containing dry composition, improver of foamability during suspension in water, and improver of emulsifiability during suspension in water".

The production method of the present invention may or may not include steps other than the enzymatic treatment step and the drying step. The "other steps" are as described in detail in the above "1. Method for improving liquid retainability of plant protein-containing dry composition, method for improving foamability during suspension in water, and method for improving emulsifiability during suspension in water".

4. Processed plant protein-containing dry composition

A dried product of a plant protein-containing composition having been subjected to the processing of treating with a protein deamidase (a processed plant protein-containing dry composition) has characteristics peculiar to the present invention that the liquid retainability, or the liquid retainability and the foamability and/or emulsifiability during suspension in water is improved as compared with a dried product of a plant protein-containing composition having not been treated with a protein deamidase (an enzyme-untreated plant protein-containing dry composition). Therefore, the present invention also provides a processed plant protein-containing dry composition obtained by "3. Method for producing processed plant protein-containing dry composition" described above.

When the processed plant protein-containing dry composition of the present invention is in an untextured form, it can be used for preparing a processed plant protein-containing liquid composition having improved liquid retainability, foamability, and/or emulsifiability by being dissolved or dispersed in a liquid (water and/or oil). Specific examples of such a processed plant protein-containing liquid composition include plant milk, plant cream, plant yogurt, and plant ice cream. In addition, since these processed plant protein-containing liquid compositions are superior in foamability, they may be prepared in a foamed state. Specific examples of such a processed plant protein-containing liquid composition in a foamed state include plant whipped cream.

When the processed plant protein-containing dry composition of the present invention is in a textured form, the processed plant protein-containing dry composition can be used for preparing a textured processed plant protein-containing composition having improved liquid retainability by being swollen with a liquid (water and/or oil). Specific examples of such a textured processed plant protein-containing composition include an alternative meat or a processed food prepared using the same (meat-like processed food), and examples of the processed food prepared using an alternative meat (meat-like processed food) include a food imitating a livestock meat and/or bird meat processed food. Such a livestock meat and/or bird meat processed food may be any food that is cooked by molding and heating a meat patty mixture using livestock meat and/or bird meat, and specific examples thereof include hamburg steak, meatball, patty, meat loaf, minced cutlet, and dim sum.

Examples

Hereinafter, the present invention will be specifically described with reference to Examples, but the present invention is not to be construed as being limited to the following Examples.

[A. Plant protein-containing composition]

A plant protein-containing composition was suspended in water such that the concentration of the plant protein material (powder) shown in Table 1 would be 10% by weight, whereby a plant protein liquid or plant milk was prepared. The content of the protein in the plant protein-containing composition (plant protein liquid or plant milk) is as shown in Tables 2A to 2C.

[Table 1]

| Product name | Plant protein | Protein content (% by weight) | Manufacturer |
|---|---|---|---|
| NUTRALYS F85M | Pea protein | 85% or more | Roquette |
| BROAD BEAN PROTEIN (FAVA) | Broad bean protein | 83.7% or more | Organo Corporation |
| CHICKPEA PROTEIN | Chickpea protein | 84% or more | Organo Corporation |
| MUNG BEAN PROTEIN | Mung bean protein | 80% or more | Organo Corporation |
| SOYPRO | Soybean protein | 50% or more | J-OIL MILLS, INC. |
| LENTIL PROTEIN | Lentil protein | 50% or more | Organo Corporation |
| RICE PROTEIN | Rice protein | 85% or more | Bio Actives |
| VITEN (registered trademark) | Gluten (wheat protein) | 80% or more | Roquette |
| OAT PROTEIN | Oat protein | 75% or more | Organo Corporation |
| BARLEY WHOLEMEAL FLOUR | Barley protein | 6.7% | TOMIZAWA SHOUTEN |
| SORGHUM WHOLEMEAL FLOUR | Sorghum protein | 9.6% | TOMIZAWA SHOUTEN |
| RYE WHOLEMEAL FLOUR | Rye protein | 8.5% | TOMIZAWA SHOUTEN |

(continued)

| Product name | Plant protein | Protein content (% by weight) | Manufacturer |
|---|---|---|---|
| ALMOND PROTEIN | Almond protein | 85% or more | Bio Actives |
| SUNFLOWER PROTEIN | Sunflower seed protein | 85% or more | Bio Actives |
| PEANUT PROTEIN | Peanut protein | 26.5% | MORIMOTO SHOUTEN |
| WALNUT PROTEIN | Walnut protein | 14.6% | TOMIZAWA SHOUTEN |
| HAZELNUT POWDER | Hazelnut protein | 13% | GABAN |
| HEMP PROTEIN | Hemp seed* protein | 85% or more | Bio Actives |
| CASHEW NUT POWDER | Cashew nut protein | 20% | MINOYA |
| PISTACHIO POWDER | Pistachio protein | 17% | MINOYA |
| CRANBERRY PROTEIN | Cranberry seed protein | 85% or more | Bio Actives |
| CHIA SEED PROTEIN | Chia seed protein | 83% or more | Organo Corporation |
| * Hemp seed is derived from industrial hemp free of THC. | | | |

[B. Protein deamidase]

Protein glutaminase derived from Chryseobacterium proteolyticum (manufactured by Amano Enzyme Inc.) was used as a protein deamidase. Hereinafter, this protein deamidase is also referred to as "PG".

The protein deamidase activity value was measured by the following method.

To 1 mL of a 0.2 M phosphate buffer (pH 6.5) containing 30 mM Z-Gln-Gly, 0.1 mL of a sample solution containing protein deamidase was added, and the mixture was allowed to stand at 37°C for 10 minutes, and then 1 mL of a 0.4 M TCA solution was added to stop the reaction. As a blank, 1 mL of a 0.4 M TCA solution was added to 1 mL of a 0.2 M phosphate buffer (pH 6.5) containing 30 mM Z-Gln-Gly, and then 0.1 mL of a sample solution containing protein deamidase was further added, and the mixture was allowed to stand at 37°C for 10 minutes.

For the solution obtained as described above, the amount of ammonia generated in the reaction liquid was measured using Ammonia Test Wako (FUJIFILM Wako Pure Chemical Corporation). A calibration curve representing the relationship between the ammonia concentration and the absorbance (630 nm) was prepared using an ammonia standard solution (ammonium chloride), and from the calibration curve, the ammonia concentration in the reaction liquid was determined.

The amount of the enzyme that produces 1 $\mu$mol of ammonia per minute was defined as 1 unit (1 U), and the activity of the protein deamidase was calculated from the following formula. In the formula, the reaction liquid amount is 2.1, the enzyme solution amount is 0.1, and Df is a dilution rate of the enzyme solution. 17.03 is a molecular weight of ammonia.

Protein deamidase activity (U/mL) = ammonia concentration in reaction liquid  (mg/L) $\times$ (1/17.03) $\times$ (reaction liquid amount/enzyme solution amount) $\times$ (1/10) $\times$ Df          [Equation 1]

[C. Production of processed plant protein-containing dry composition]

5 U of PG (the amount of PG per 1 g of protein is as shown in Tables 2A to 2C) was added to 1 g of the plant protein material in the plant protein liquid or plant milk shown in the above [A. Plant protein-containing composition] (pH of the mixture of the plant protein-containing composition and PG at 25°C was about 6.5), and the mixture was incubated at 50°C for 16 hours, and then the enzyme was deactivated by heat treatment at 100°C for 5 minutes. Furthermore, the enzyme-treated plant protein liquid or plant milk was freeze-dried, affording a processed plant protein-containing dry composition. The resulting processed plant protein-containing dry composition was subjected to the following "D. Characteristic test".

Separately, the same operation was performed except that PG was not added to the plant protein liquid or the plant milk, whereby an enzyme-untreated plant protein-containing dry composition was obtained. The resulting enzyme-untreated plant protein-containing dry composition was subjected to the following "D. Characteristic test".

[D. Characteristic test]

[D-1. Liquid retainability test]

[D-1-1. Water retainability test]

An aqueous suspension was prepared by suspending 0.1 g of the processed plant protein-containing dry composition in 1 g of deionized water and vortexing the mixture for 30 seconds. The aqueous suspension was left at rest for 30 minutes, then centrifuged at 2,000 g for 10 minutes, and the supernatant was collected. The weight of the collected supernatant was measured, and the obtained measured value was subtracted from 1 g (the weight of the deionized water used for suspension) to calculate the weight of the water absorbed by the protein. Furthermore, the weight of water absorbed per 1 g of the processed plant protein-containing dry composition was calculated, and the value obtained was defined as "water retainability". Also for the enzyme-untreated plant protein-containing dry composition, the water retainability was similarly calculated. A relative value of the water retainability of the processed plant protein-containing dry composition where the water retainability of the enzyme-untreated plant protein-containing dry composition was 1 was determined as an evaluation value of water retainability. The results are shown in Table 2A. In Table 2A, the evaluation value of water retainability is a numerical value attached with "(water)".

[D-1-2. Oil retainability test]

An oil suspension was prepared by suspending 0.1 g of the processed plant protein-containing dry composition in 1 g of canola oil and vortexing the mixture for 30 seconds. The oil suspension was left at rest for 30 minutes, then centrifuged at 2,000 g for 10 minutes, and the supernatant was collected. The weight of the collected supernatant was measured, and the obtained measured value was subtracted from 1 g (the weight of the canola oil used for suspension) to calculate the weight of the oil absorbed by the protein. Furthermore, the weight of oil absorbed per 1 g of the processed plant protein-containing dry composition was calculated, and the value obtained was defined as "oil retainability". Also for the enzyme-untreated plant protein-containing dry composition, the oil retainability was similarly calculated. A relative value of the oil retainability of the processed plant protein-containing dry composition where the oil retainability of the enzyme-untreated plant protein-containing dry composition was 1 was determined as an evaluation value of oil retainability. The results are shown in Table 2A. In Table 2A, the evaluation value of oil retainability is a numerical value attached with "(oil)".

[D-2. Foamability test]

The processed plant protein-containing dry composition was suspended in deionized water, whereby 50 mL of a 0.5% by weight aqueous suspension was prepared. The aqueous suspension was homogenized at 18,000 rpm for 30 minutes and immediately transferred to a 100 mL graduated cylinder. The volume VF0 of the aqueous suspension including foams was measured, and the "foamability" was calculated using the following calculation formula.

$$[\text{Equation 2}]$$

$$\text{Foamability (\%)} = 100 \times (VF0 - 50)/50$$

Also for the enzyme-untreated plant protein-containing dry composition, the foamability was similarly calculated. A relative value of the foamability of the processed plant protein-containing dry composition where the foamability of the enzyme-untreated plant protein-containing dry composition was 1 was determined as an evaluation value of foamability. The results are shown in Table 2B.

(Foam stability test)

A foam stability test was also performed for some processed plant protein-containing dry compositions. The processed plant protein-containing dry composition was suspended in deionized water, whereby 50 mL of a 0.5% aqueous suspension was prepared. The aqueous suspension was homogenized at 18,000 rpm for 30 minutes and immediately transferred to a 100 mL graduated cylinder, and the volume VF0 of the aqueous suspension including foams was measured. After 30 minutes, the volume VF30 of the aqueous suspension including foams was measured in the same manner, and the "foam stability" was calculated using the following calculation formula.

$$[\text{Equation 3}]$$

$$\text{Foam stability (\%)} = 100 \times (VF30/VF0)$$

Also for the enzyme-untreated plant protein-containing dry composition, the foam stability was similarly calculated. A relative value of the foam stability of the processed plant protein-containing dry composition where the foam stability of the enzyme-untreated plant protein-containing dry composition was 1 was determined as an evaluation value of foam stability. The results are shown in Table 2B.

[D-3. Emulsifiability test]

The processed plant protein-containing dry composition was suspended in deionized water, whereby 30 mL of an aqueous suspension containing 1% protein was prepared. 30 mL of the aqueous suspension and 10 mL of canola oil were mixed and homogenized at 10,000 rpm for 2 minutes, whereby an emulsified composition was prepared. 50 μL of the emulsified composition immediately after the preparation was added to 5 mL of a 0.1% SDS solution. The turbidity (A0) of the mixture was measured at an absorbance of 500 nm, and the "emulsifiability" was calculated using the following calculation formula.

[Equation 4]

$$\text{Emulsifiability (m}^2/\text{g)} = (2 \times 2.303 \times A0)/(0.25 \times \text{protein weight})$$

Also for the enzyme-untreated plant protein-containing dry composition, the emulsifiability was similarly calculated. A relative value of the emulsifiability of the processed plant protein-containing dry composition where the emulsifiability of the enzyme-untreated plant protein-containing dry composition was 1 was determined as an evaluation value of emulsifiability. The results are shown in Table 2C.

(Emulsion stability test)

An emulsion stability test was also performed for some processed plant protein-containing dry compositions. The processed plant protein-containing dry composition was suspended in deionized water, whereby 30 mL of an aqueous suspension containing 1% protein was prepared. 30 mL of the aqueous suspension and 10 mL of canola oil were mixed and homogenized at 10,000 rpm for 2 minutes, whereby an emulsified composition was prepared. 50 μL of the emulsified composition immediately after the preparation was added to 5 mL of a 0.1% SDS solution, and the turbidity (A0) of the mixture was measured at an absorbance of 500 nm. 50 μL of the emulsified composition left at rest for 10 minutes was added to 5 mL of a 0.1% SDS solution, and the turbidity (A10) of the mixture was measured at an absorbance of 500 nm. The "emulsion stability" was calculated using the following calculation formula.

[Equation 5]

$$\text{Emulsion stability (\%)} = \{(A10 \times 10)/(A0 - A10)\} \times 100$$

Also for the enzyme-untreated plant protein-containing dry composition, the emulsion stability was similarly calculated. A relative value of the emulsion stability of the processed plant protein-containing dry composition where the emulsion stability of the enzyme-untreated plant protein-containing dry composition was 1 was determined as an evaluation value of emulsion stability. The results are shown in Table 2C.

[Table 2A]

| | Plant protein-derived plant | Protein content (% by weight) in composition | Amount (U) of PG added per g of protein | Liquid retainability |
|---|---|---|---|---|
| Example 1 | Pea | 8.50% | 5.9 | 1.1 (Oil) |
| Example 2 | Broad bean | 8.37% | 6 | 1.2 (Water) 1.2 (Oil) |
| Example 3 | Chickpea | 8.40% | 6 | 1.2 (Water) 1.3 (Oil) |
| Example 4 | Mung bean | 8.00% | 6.3 | 1.2 (Water) 1.1 (Oil) |
| Example 5 | Soybean | 5.00% | 10 | 1.5 (Water) |

(continued)

|  | Plant protein-derived plant | Protein content (% by weight) in composition | Amount (U) of PG added per g of protein | Liquid retainability |
|---|---|---|---|---|
| Example 6 | Lentil | 5.00% | 10 | 1.7 (Water) 1.1 (Oil) |
| Example 7 | Rice | 8.50% | 5.9 | 1.1 (Water) 1.1 (Oil) |
| Example 8 | Wheat | 8.00% | 6.3 | 1.2 (Oil) |
| Example 9 | Oat | 7.50% | 6.7 | 1.2 (Water) 1.2 (Oil) |
| Example 10 | Barley | 0.67% | 74.6 | 1.1 (Water) 1.1 (Oil) |
| Example 11 | Sorghum | 0.96% | 52.1 | 1.1 (Oil) |
| Example 12 | Rye | 0.85% | 58.8 | 1.1 (Water) |
| Example 13 | Almond | 8.50% | 5.9 | 1.4 (Water) 1.3 (Oil) |
| Example 14 | Sunflower | 8.50% | 5.9 | 1.7 (Water) 1.2 (Oil) |
| Example 15 | Peanut | 2.65% | 18.9 | 1.1 (Oil) |
| Example 16 | Walnut | 1.46% | 34.2 | 1.2 (Water) |
| Example 17 | Hazelnut | 1.30% | 38.5 | 1.1 (Oil) |
| Example 18 | Hemp | 8.50% | 5.9 | 1.1 (Oil) |
| Example 19 | Cashew nut | 2.00% | 25 | 1.1 (Water) |
| Example 20 | Pistachio | 1.70% | 29.4 | 1.1 (Water) 1.2 (Oil) |

[Table 2B]

|  | Plant protein-derived plant | Protein content (% by weight) in composition | Amount (U) of PG added per g of protein | Foamability | Foam stability |
|---|---|---|---|---|---|
| Example 1 | Pea | 8.50% | 5.9 | 1.2 | |
| Example 2 | Broad bean | 8.37% | 6 | 1.6 | |
| Example 3 | Chickpea | 8.40% | 6 | 1.9 | |
| Example 4 | Mung bean | 8.00% | 6.3 | 1.2 | |
| Example 5 | Soybean | 5.00% | 10 | 1.6 | |
| Example 6 | Lentil | 5.00% | 10 | 1.3 | |
| Example 7 | Rice | 8.50% | 5.9 | 2.0 | |
| Example 8 | Wheat | 8.00% | 6.3 | 2.2 | 1.2 |
| Example 9 | Oat | 7.50% | 6.7 | 2.0 | |
| Example 10 | Barley | 0.67% | 74.6 | 1.6 | |
| Example 11 | Sorghum | 0.96% | 52.1 | 3.3 | |
| Example 13 | Almond | 8.50% | 5.9 | 31.0 | |
| Example 14 | Sunflower | 8.50% | 5.9 | 1.8 | 1.1 |
| Example 15 | Peanut | 2.65% | 18.9 | 1.7 | |
| Example 16 | Walnut | 1.46% | 34.2 | 1.2 | |

(continued)

|  | Plant protein-derived plant | Protein content (% by weight) in composition | Amount (U) of PG added per g of protein | Foamability | Foam stability |
|---|---|---|---|---|---|
| Example 17 | Hazelnut | 1.30% | 38.5 | 2.7 | |
| Example 21 | Cranberry | 8.50% | 5.9 | 2.3 | |

[Table 2C]

|  | Plant protein-derived plant | Protein content (% by weight) in composition | Amount (U) of PG added per g of protein | Emulsifiability | Emulsion stability |
|---|---|---|---|---|---|
| Example 1 | Pea | 8.50% | 5.9 | 1.3 | |
| Example 2 | Broad bean | 8.37% | 6 | 1.1 | 1.3 |
| Example 3 | Chickpea | 8.40% | 6 | 1.4 | 1.9 |
| Example 4 | Mung bean | 8.00% | 6.3 | 1.3 | |
| Example 5 | Soybean | 5.00% | 10 | 5.5 | 1.6 |
| Example 6 | Lentil | 5.00% | 10 | 1.7 | 1.2 |
| Example 7 | Rice | 8.50% | 5.9 | 2.6 | 1.5 |
| Example 8 | Wheat | 8.00% | 6.3 | 2.4 | 4.0 |
| Example 9 | Oat | 7.50% | 6.7 | 8.0 | 1.5 |
| Example 10 | Barley | 0.67% | 74.6 | 1.4 | 1.3 |
| Example 12 | Rye | 0.85% | 58.8 | 2.1 | 1.5 |
| Example 13 | Almond | 8.50% | 5.9 | 1.3 | 2.2 |
| Example 14 | Sunflower | 8.50% | 5.9 | 1.6 | 3.5 |
| Example 15 | Peanut | 2.65% | 18.9 | 2.8 | |
| Example 16 | Walnut | 1.46% | 34.2 | 1.2 | 1.1 |
| Example 17 | Hazelnut | 1.30% | 38.5 | | 1.7 |
| Example 18 | Hemp | 8.50% | 5.9 | 2.7 | 3.2 |
| Example 19 | Cashew nut | 2.00% | 25 | 1.6 | |
| Example 20 | Pistachio | 1.70% | 29.4 | 3.4 | 4.5 |
| Example 22 | Chia | 8.30% | 6 | 1.2 | 1.1 |

As shown in Tables 2A to 2C, the liquid retainability, or the liquid retainability and the foamability and/or emulsifiability during suspension in water of the dried products of the plant protein-containing compositions having been subjected to the processing of treating with a protein deamidase (the processed plant protein-containing dry compositions) was improved as compared with the dried products of the plant protein-containing compositions having not been treated with a protein deamidase (the enzyme-untreated plant protein-containing dry compositions).

**Claims**

1. A method for improving liquid retainability of a plant protein-containing dry composition, the method comprising:

an enzymatic treatment step of making a protein deamidase act on a plant protein-containing composition to obtain a processed plant protein-containing composition; and
a drying step of drying the processed plant protein-containing composition to obtain a processed plant protein-containing dry composition,
wherein the liquid retainability when the processed plant protein-containing dry composition coexists with a liquid is improved.

2.  The method for improving liquid retainability according to claim 1, wherein the plant protein is a protein of a plant selected from the group consisting of pulse crops, cereal crops, and seeds.

3.  The method for improving liquid retainability according to claim 1, wherein the plant protein is a protein of a plant selected from the group consisting of soybean, pea, lentil, chickpea, broad bean, mung bean, wheat, barley, oat, sorghum, rice, rye, almond, peanut, cashew nut, hazelnut, pistachio, walnut, hemp seed, and sunflower seed.

4.  A liquid retainability improver for a plant protein-containing dry composition, the liquid retainability improver comprising a protein deamidase.

5.  A method for improving foamability during suspension of a plant protein-containing dry composition in water, the method comprising:

    an enzymatic treatment step of making a protein deamidase act on a plant protein-containing composition to obtain a processed plant protein-containing composition; and
    a drying step of drying the processed plant protein-containing composition to obtain a processed plant protein-containing dry composition,
    wherein foamability is improved when the processed plant protein-containing dry composition is suspended in water.

6.  The method for improving foamability according to claim 5, wherein the plant protein is a protein of a plant selected from the group consisting of pulse crops, cereal crops, and seeds.

7.  The method for improving foamability according to claim 5, wherein the plant protein is a protein of a plant selected from the group consisting of soybean, pea, lentil, chickpea, broad bean, mung bean, wheat, barley, oat, sorghum, rice, almond, peanut, hazelnut, walnut, sunflower seed, and cranberry seed.

8.  The method for improving foamability according to claim 5, wherein the plant protein is a protein of almond.

9.  An improver of foamability during suspension of a plant protein-containing dry composition in water, the improver comprising a protein deamidase.

10. A method for improving emulsifiability during suspension of a plant protein-containing dry composition in water, the method comprising:

    an enzymatic treatment step of making a protein deamidase act on a plant protein-containing composition to obtain a processed plant protein-containing composition; and
    a drying step of drying the processed plant protein-containing composition to obtain a processed plant protein-containing dry composition,
    wherein emulsifiability is improved when the processed plant protein-containing dry composition is suspended in water.

11. The method for improving emulsifiability according to claim 10, wherein the plant protein is a protein of a plant selected from the group consisting of pulse crops, cereal crops, and seeds.

12. The method for improving emulsifiability according to claim 10, wherein the plant protein is a protein of a plant selected from the group consisting of soybean, pea, lentil, chickpea, broad bean, mung bean, wheat, barley, oat, rice, rye, almond, peanut, cashew nut, pistachio, walnut, hemp seed, chia seed, and sunflower seed.

13. The method for improving emulsifiability according to claim 10, wherein the plant protein is a protein of oat.

14. An improver of emulsifiability during suspension of a plant protein-containing dry composition in water, the improver comprising a protein deamidase.

15. A method for producing a processed plant protein-containing dry composition, the method comprising:

an enzymatic treatment step of making a protein deamidase act on a plant protein-containing composition to obtain a processed plant protein-containing composition; and

a drying step of drying the processed plant protein-containing composition to obtain a processed plant protein-containing dry composition,

wherein liquid retainability when the processed plant protein-containing dry composition coexists with a liquid is improved.

16. The method according to claim 15, wherein foamability and/or emulsifiability when the processed plant protein-containing dry composition is further suspended in water is improved.

17. A processed plant protein-containing dry composition obtained by the method according to claim 15 or 16.

## INTERNATIONAL SEARCH REPORT

| International application No. |
| --- |
| **PCT/JP2023/047293** |

| A. | CLASSIFICATION OF SUBJECT MATTER |
| --- | --- |

*A23J 3/14*(2006.01)i; *A23C 11/02*(2006.01)i; *A23J 3/16*(2006.01)i; *A23J 3/18*(2006.01)i; *A23L 2/39*(2006.01)i; *A23L 2/66*(2006.01)i; *A23L 11/00*(2021.01)i; *A23L 25/00*(2016.01)i

FI: A23J3/14; A23L11/00 Z; A23L11/00 F; A23J3/16; A23J3/18; A23L25/00; A23L2/00 Q; A23L2/00 J; A23L2/66; A23C11/02

According to International Patent Classification (IPC) or to both national classification and IPC

| B. | FIELDS SEARCHED |
| --- | --- |

Minimum documentation searched (classification system followed by classification symbols)

A23J3/14; A23C11/02; A23J3/16; A23J3/18; A23L2/39; A23L2/66; A23L11/00; A23L25/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020/038611 A1 (RAISIO NUTRITION LTD.) 27 February 2020 (2020-02-27) claims, examples | 1-4 |
| Y | claims, examples | 1-17 |
| Y | WO 2021/201277 A1 (AMANO ENZYME INC.) 07 October 2021 (2021-10-07) claims, examples, etc. | 1-17 |
| Y | WO 2022/014542 A1 (AMANO ENZYME INC.) 20 January 2022 (2022-01-20) claims, examples, etc. | 1-17 |
| Y | WO 2021/251344 A1 (AMANO ENZYME INC.) 16 December 2021 (2021-12-16) claims, examples, etc. | 1-17 |
| A | WO 2022/102723 A1 (AMANO ENZYME INC.) 19 May 2022 (2022-05-19) claims, examples, etc. | 1-17 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 March 2024** | **02 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/047293**

| Patent document cited in search report | | | Publication date (day/month/year) | Patent family member(s) | | | Publication date (day/month/year) |
|---|---|---|---|---|---|---|---|
| WO | 2020/038611 | A1 | 27 February 2020 | (Family: none) | | | |
| WO | 2021/201277 | A1 | 07 October 2021 | US | 2023/0183771 | A1 | |
| | | | | claims, examples | | | |
| | | | | EP | 4130286 | A1 | |
| | | | | CN | 115380116 | A | |
| WO | 2022/014542 | A1 | 20 January 2022 | US | 2023/0248019 | A1 | |
| | | | | claims, examples | | | |
| | | | | EP | 4180528 | A1 | |
| | | | | CN | 115715156 | A | |
| WO | 2021/251344 | A1 | 16 December 2021 | US | 2023/0210130 | A1 | |
| | | | | claims, examples | | | |
| | | | | EP | 4162806 | A1 | |
| | | | | CN | 115867144 | A | |
| WO | 2022/102723 | A1 | 19 May 2022 | EP | 4245149 | A1 | |
| | | | | CN | 116471944 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000050887 A
- JP 2001218590 A
- WO 2006075772 A

**Non-patent literature cited in the description**

- **TOKUJI WATANABE** ; **OSAMU NAKAYAMA** ; **KAZUYOSHI ABE** ; **SETSUKO MIYANAGA**. Study of Spray-dried Soybean Milk. *Journal for the utilization of agricultural products*, December 1961, vol. 8 (6), 288-293